# DEMANDE DE BREVET EUROPEEN

(11) **EP 4 620 856 A1**
(43) Date de publication de la demande: **24.09.2025**
(21) Numéro de dépôt: 25160057.3
(22) Date de dépôt: 25.02.2025
(51) Int. Cl.: B65D 65/42, D21H 19/18, D21H 19/34, D21H 19/52, D21H 19/84, D21H 21/16, D21H 27/10, D21H 27/30, B32B 29/00, D21H 27/38

(54) **MATÉRIAU D EMBALLAGE STRATIFIÉ, COMPRENANT UNE BASE CARTON ENDUITE D'UN REVÊTEMENT PAPIER ANTI-ABRASIF**

(30) Priorité: 21.03.2024 FR 2402821
(71) Demandeur: Cartonnerie Oudin, 37320 Truyes (FR)
(72) Inventeur: de TUDERT, Georges, 37210 Vouvray (FR)
(74) Mandataire: Lequien, Philippe

(57) **Abrégé**

L'invention concerne un matériau d'emballage stratifié, comprenant au moins un carton de base (10) enduit sur au moins l'une de ses faces, d'un revêtement anti-abrasif,
caractérisé en ce que le revêtement anti-abrasif est une feuille de papier (11) incluant un maximum de cinq grains de type minéral de diamètre compris entre 100 et 150 microns par mètre carré de papier, une face (110) de la feuille de papier étant appliquée sur le carton de base, l'autre face (111) de la feuille de papier étant enduite d'un enduit comprenant une cire.

## Description

Le domaine de l'invention est celui de la conception et de la fabrication de matériaux d'emballage cartonnés, notamment mais non exclusivement pour la réalisation de croisillons délimitant des emplacements destinés à recevoir des flacons ou autres contenants.

Dans le domaine de l'invention, le recours au carton pour réaliser des emballages est depuis longtemps largement répandu.

Dans une utilisation particulière, des bandes cartonnées sont façonnées avec des fentes régulièrement réparties, de façon à pouvoir chevaucher une autre bande cartonnée identique en s'étendant perpendiculairement l'une par rapport à l'autre. Selon ce principe, avec un nombre approprié de bandes cartonnées, on peut réaliser des croisillons destinés à être accueillis dans une boite en carton, de telle sorte que les croisillons s'étendent sur toute la surface du fond de la boite en carton.

Ainsi, de tels croisillons délimitent des emplacements pour des flacons par exemple, et en particulier des flacons en verre contenant du parfum, des produits cosmétiques...

Or, certains acteurs de l'industrie du parfum ou de l'industrie cosmétique qui utilisent les cartons intégrant des croisillons pour l'expédition de leurs flacons souhaitent qu'il soit apporté un soin particulier à leurs flacons. Il faut notamment leur assurer que les flacons et/ou les étiquettes que ces flacons portent ne soient aucunement endommagés pendant l'expédition, s'agissant notamment d'éventuelles rayures causées par le frottement du flacon ou de son étiquette contre les parois des croisillons.

En effet, un matériau cartonné est par nature plus ou moins abrasif et peut causer de telles rayures.

Aussi, pour éviter les rayures dues au frottement contre le carton, une solution de l'état de la technique consiste à appliquer un revêtement plastique du côté du carton, susceptible d'être amené en contact avec les produits transportés.

De cette façon, on obtient une surface lisse, non abrasive, ce qui permet de garder intacts les produits transportés.

Cela étant, le carton ainsi revêtu d'un film plastique devient plus difficilement recyclable et, de façon générale, le recours à la matière plastique devient un moyen à éviter pour des raisons d'environnement et de développement durable.

L'invention a notamment pour objectif de pallier cet inconvénient de l'art antérieur.

Plus précisément, l'invention a pour objectif de proposer un matériau d'emballage stratifié comprenant une couche de base en carton, préférentiellement issue de fibres recyclées ou régénérées, qui présente des propriétés anti-abrasives, ceci sans recourir à un revêtement de type plastique.

L'invention a également pour objectif de fournir un tel matériau d'emballage qui puisse être fabriqué de façon simple et peu coûteuse.

Ces objectifs, ainsi que d'autres qui apparaîtront par la suite, sont atteints grâce à l'invention qui a pour objet un matériau d'emballage stratifié, comprenant au moins un carton de base enduit sur au moins l'une de ses faces, d'un revêtement anti-abrasif, caractérisé en ce que le revêtement anti-abrasif est une feuille de papier incluant un maximum de cinq grains de type minéral de diamètre compris entre 100 et 150 microns par mètre carré de papier, une face de la feuille de papier étant appliquée sur le carton de base, l'autre face de la feuille de papier étant enduite d'un enduit comprenant une cire.

De cette façon, on confère au matériau d'emballage stratifié ayant une couche de base « cartonnée » des propriétés anti-abrasives, ceci en remplaçant le film plastique anti-abrasif de l'art antérieur par un revêtement papier spécialement conçu pour ses propriétés anti-abrasives.

Ainsi, on obtient un matériau respectueux des considérations environnementales et de développement durable, le matériau obtenu étant biodégradable intégralement.

Selon un mode de réalisation avantageux, l'enduit représente entre 6 % et 7,5 % en masse de la feuille de papier qui comprend par ailleurs entre 91 % et 95 % d'une pâte de fibre cellulosique.

Préférentiellement, la feuille de papier comprend en masse :
- 92,4 % d'une pâte de fibre cellulosique
- 6,8 % d'enduit
- 0,8 % d'un additif formant agent de cohésion

Selon une solution avantageuse, la feuille de papier présente une épaisseur comprise entre 48 µm et 60 µm, et préférentiellement une épaisseur de 54 µm.

Selon un mode de réalisation avantageux, la feuille de papier présente une résistance à la traction d'environ 4 kN/m2 sur sa face présentant l'enduit.

Selon un mode de réalisation particulier, le matériau comprend trois couches de fibres recyclées ou régénérées accolées les unes aux autres pour former le carton de base, et en particulier pour former un carton plat de base.

D'autres caractéristiques et avantages de l'invention apparaîtront plus clairement à la lecture de la description suivante d'un mode de réalisation préférentiel de l'invention, donné à titre de simple exemple illustratif et non limitatif, et des dessins annexés parmi lesquels :
- la figure 1 illustre schématiquement un matériau d'emballage stratifié selon un mode de réalisation particulier de l'invention ;
- la figure 2 illustre schématiquement une installation pour la fabrication d'un matériau d'emballage stratifié selon l'invention.

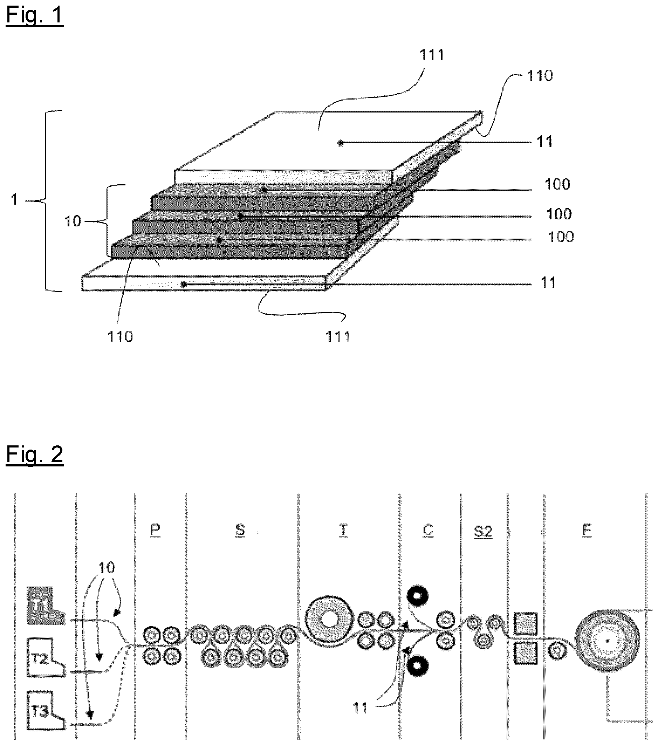

En référence à la figure 1, on décrit ci-après un matériau d'emballage stratifié 1, comprenant au moins carton de base 10, enduit sur au moins d'une de ses faces d'un revêtement anti-abrasif.

Selon l'invention, le revêtement anti-abrasif est une feuille de papier 11 incluant un maximum de cinq grains de type minéral de diamètre compris entre 100 et 150 µm par mètre carré de papier.

Cette feuille de papier 11 présente une face 110 appliquée sur la couche de base en carton 10, l'autre face 111, opposée à la face 110 de la feuille de papier, est enduite d'un enduit comprenant une cire.

Préférentiellement, la cire de l'enduit est une cire naturelle.

Selon le mode de réalisation illustré par la figure 1, le carton de base 10 du matériau d'emballage stratifié est constitué de trois couches de fibres recyclées ou régénérées 100 accolées les unes aux autres.

Tel qu'illustré par la figure 1, le carton de base en carton 10 est pris en sandwich entre deux feuilles de papier 11, chacune avec une face appliquée sur le carton de base et l'autre face 111 enduite d'un enduit comprenant une cire naturelle.

Selon des caractéristiques avantageuses de l'invention, l'enduit représente entre 6 % et 7,5 % en masse de la feuille de papier, constitué par ailleurs d'une pâte de fibre cellulosique représentant de 91 % à 94 % en masse de la feuille de papier.

Selon un mode de réalisation avantageux, la feuille de papier comprend :
- 92,4 % d'une pâte de fibre cellulosique
- 6,8 % d'enduit
- 0,8 % d'un additif formant agent de cohésion

Par ailleurs, la feuille de papier 11, ou chaque de papier 11, présente une épaisseur comprise entre 48 µm et 60 µm, et préférentiellement une épaisseur de 54 µm.

En outre, la feuille de papier 11, ou chaque feuille de papier 11, présente une résistance à la traction d'environ 4 kN/m² sur sa face 111 présentant un enduit.

Par ailleurs, la feuille de papier 11, ou chaque feuille de papier 11, peut en outre présenter les caractéristiques suivantes :
- elle présente un grammage de 45 g/m2 ;
- elle présente un taux d'humidité de 4 à 5 %, et préférentiellement 4,5 %, avant collage sur la couche de base en carton ;
- elle présente un degré de blanc de 80 CIE, D65/10 degrés ;
- elle présente, sur chacune de ses faces, un indice Cobb compris entre 20 g/m2 et 30 g/m2.

Un matériau d'emballage stratifié selon l'invention peut être obtenu avec une installation en ligne décrite ci-après en référence à la figure 2.

Trois caisses de tête T1, T2 et T3 contiennent chacune une pâte à papier à partir desquelles sont formées trois couches qui sont introduites dans une presse 3 dans laquelle elles sont accolées les unes aux autres pour former le carton de base. Ces trois couches de fibres sont ensuite introduites dans une presse P, puis dans une sécherie S, permettant de laminer et de sécher les couches de fibres pour produire un matelas fibreux (le carton de base).

Après passage dans un poste de traitement de surface T, le carton de base est entraîné dans un poste de contre-collage C dans lequel une feuille de papier 11 selon l'invention est déroulée à partir d'une bobine supérieure et une autre feuille de papier 11 est déroulée à partir d'une bobine inférieure, de telle sorte que chacune des faces du carton de base soit revêtu d'une feuille de papier 11.

L'ensemble ainsi obtenu est amené dans une deuxième sécherie S2 en sortie de laquelle le produit est enroulé sur une enrouleuse E.

Le matériau d'emballage stratifié enroulé peut ensuite être débité sous forme de feuilles ou de bandes pour réaliser des croisillons destinés à former des logements, par exemple pour des flacons, une fois disposés au fond d'une boite en carton.

## Revendications

1. Matériau d'emballage stratifié, comprenant au moins un carton de base (10) enduite sur au moins l'une de ses faces, d'un revêtement anti-abrasif,
**caractérisé en ce que** le revêtement anti-abrasif est une feuille de papier (11) incluant un maximum de cinq grains de type minéral de diamètre compris entre 100 et 150 microns par mètre carré de papier, une face (110) de la feuille de papier étant appliquée sur le carton de base, l'autre face (111) de la feuille de papier étant enduite d'un enduit comprenant une cire.

2. Matériau d'emballage stratifié selon la revendication 1, **caractérisé en ce que** l'enduit représente entre 6 % et 7,5 % en masse de la feuille de papier (11) qui comprend par ailleurs entre 91 % et 94 % d'une pâte de fibres cellulosiques.

3. Matériau d'emballage stratifié selon la revendication 2, **caractérisé en ce que** la feuille de papier (11) comprend en masse :
- 92,4 % d'une pâte de fibres cellulosiques
- 6,8 % d'enduit
- 0,8 % d'un additif formant agent de cohésion.

4. Matériau d'emballage stratifié selon l'une quelconque des revendications précédentes, **caractérisé en ce que** la feuille de papier (11) présente une épaisseur comprise entre 48 µm et 60 µm.

5. Matériau d'emballage stratifié selon la revendication précédente, **caractérisé en ce que** la feuille de papier (11) présente une épaisseur de 54 µm.

6. Matériau d'emballage stratifié selon l'une quelconque des revendications précédentes, **caractérisé en ce que** la feuille de papier(11) présente une résistance à la traction d'environ 4 kN/m² sur sa face présentant l'enduit.

7. Matériau d'emballage stratifié selon l'une quelconque des revendications précédentes, **caractérisé en ce qu'**il comprend trois couches de fibres recyclées ou régénérées accolées les unes aux autres pour former le carton de base.
